# EUROPEAN PATENT SPECIFICATION

(11) **EP 2 938 038 B1**
(45) Date of publication and mention of the grant of the patent: **22.11.2017**
(21) Application number: 13866256.4
(22) Date of filing: 03.12.2013
(51) Int. Cl.: H04N 5/222, H04N 5/232, H04N 5/247, G06F 17/30, H04N 21/2187, H04N 21/422, H04N 21/6587

(54) **IMMERSION COMMUNICATION CLIENT AND SERVER, AND METHOD FOR OBTAINING CONTENT VIEW**
IMMERSIONSKOMMUNIKATIONSCLIENT UND -SERVER SOWIE VERFAHREN ZUM ABRUFEN VON INHALTSANSICHTEN
CLIENT ET SERVEUR POUR UNE COMMUNICATION EN IMMERSION, ET PROCÉDÉ POUR OBTENIR UNE VUE D'UN CONTENU

(30) Priority: 18.12.2012 CN 201210551314
(43) Date of publication of application: 28.10.2015
(73) Proprietor: ZTE Corporation, Shenzhen, Guangdong 518057 (CN)
(72) Inventor: HUANG, Cheng, Shenzhen Guangdong 518057 (CN)
(74) Representative: Novagraaf Technologies
(86) International application number: PCT/CN2013/088442
(87) International publication number: WO 2014/094537

(56) References cited:
- CN-A- 101 375 599
- CN-A- 102 339 629
- CN-Y- 200 953 070
- US-A1- 2010 299 630
- US-A1- 2011 254 914

## Description

### Technical Field

The present invention relates to the field of communications, and in particular to an immersive Communication client, an immersive Communication server and a method for acquiring a content view.

### Background

As a next-generation social communication medium, the tele-immersion technology, which allows remote cooperation and interaction between users geographically distributed by re-constructing a physical scene in a virtual environment, has been attracting more and more attention from the academia and the industry.

The immersion experience may increase perception to a real environment, and help to implement the interaction of multimedia applications, including a video conference, entertainment, game and the like. A re-constructed immersion virtual environment may provide a user with a Wide Field of View (WFOV), so that the user may acquire an immersive visual experience even in a remote place.

The viewing angle of a single camera is limited. At present, a 4-CCD based remote real-time system for generating and displaying a panoramic view and its application have already appeared, and the system provides a horizontal FOV of 150 DEG and a vertical FOV of 110 DEG, so as to promote video immersion to a certain extent.

However, in the real environment, the user may freely change a viewing scene (i.e., the content view), without being limited by a fixed FOV and a viewing distance. A well-experienced remote immersive Communication system (such as providing "being-there" and "being-with" immersion experience) should acquire a status (remote control input and gesture detection) according to the current FOV and viewing distance of the user, and further synchronously updates a content view source, so as to meet the requirement of the user on the immersive communication experience better, whereas, this problem has not been fully studied and solved yet. US 2011/254914 A1 discloses an apparatus, a method of providing scenes on a display and an immersive viewing system. The apparatus includes: (1) a movement detector configured to monitor movement of a user with respect to a display and includes a distance sensor configured to detect a distance of the user from the display and (2) an active screen displayer configured to navigate an active scene on the display based on changes in the distance and dynamically provide an updated view of the active scene on the display based thereon.

### Summary

The scope of the invention is described in the appended set of claims.

### Brief Description of the Drawings

The drawings illustrated here are to provide further understanding of the present invention and constitute one part of the application, and the exemplary embodiments of the present invention and the explanations thereof are intended to explain the present invention, instead of improperly limiting the present invention. In the drawings:
Fig. 1 is a block diagram showing the structure of an immersive Communication client according to an embodiment of the present invention;
Fig. 2 is a block diagram showing the structure of a preferred immersive Communication client according to an embodiment of the present invention;
Fig. 3 is a block diagram showing the structure of a preferred collection component according to an embodiment of the present invention;
Fig. 4 is a block diagram showing the structure of an immersive Communication server according to an embodiment of the present invention;
Fig. 5 is a first block diagram showing the structure of a preferred acquisition component according to an embodiment of the present invention;
Fig. 6 is a second block diagram showing the structure of a preferred acquisition component according to an embodiment of the present invention;
Fig. 7 is a first diagram showing the flow of a method for acquiring a content view according to an embodiment of the present invention;
Fig. 8 is a second diagram showing the flow of a method for acquiring a content view according to an embodiment of the present invention;
Fig. 9 is a diagram of an immersive Communication system according to an embodiment of the present invention;
Fig. 10 is a first diagram showing the flow of a method for switching a content view according to an embodiment of the present invention;
Fig. 11 is a second diagram showing the flow of a method for switching a content view according to an embodiment of the present invention;
Fig. 12 is a first diagram showing the flow of a method for zooming a content view according to an embodiment of the present invention;
Fig. 13 is a second diagram showing the flow of a method for zooming a content view according to an embodiment of the present invention;
Fig. 14 is a diagram showing the flow of a method for notifying the updating of a content view according to an embodiment of the present invention;
Fig. 15 is a diagram showing the signalling flow of a method for updating a content view according to a first embodiment of the present invention;
Fig. 16 is a diagram showing the signalling flow of a method for updating a content view according to a second embodiment of the present invention; and
Fig. 17 is a diagram showing the signalling flow of a method for updating a content view according to a third embodiment of the present invention.

### Detailed Description of the Embodiments

The present invention will be described below with reference to the drawings and in combination with the embodiments in detail. It should be noted that, in case of no conflict, the embodiments of the application and features therein may be combined with one another.

According to embodiments of the present invention, an immersive Communication client, an immersive Communication server and a method for acquiring a content view are provided. The embodiments of the present invention are described below in various aspects.

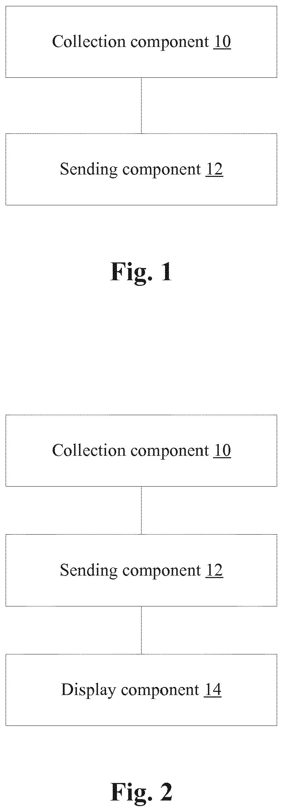

Fig. 1 is a block diagram showing the structure of an immersive Communication client according to an embodiment of the present invention, as shown in Fig. 1, the immersive Communication client mainly includes: a collection component 10 and a sending component 12, wherein the collection component 10 is configured to collect content view selection information from a user; and the sending component 12 is connected with the collection component 10 and is configured to send a content view acquisition request to an immersive Communication server, wherein the content view acquisition request is used for requesting the immersive Communication server to acquire the content view according to the content view selection information.

Fig. 2 is a block diagram showing the structure of a preferred immersive Communication client according to an embodiment of the present invention, as shown in Fig. 2, the immersive Communication client here may further include: a display component 14 which is configured to receive the content view fed back from the immersive Communication server and display the received content view.

In an implementation way of the embodiment of the present invention, the immersive Communication client may further include: a receiving component which is configured to receive a content view updating notification from the immersive Communication server, wherein the content view updating notification caries the content view change information of other immersive Communication clients.

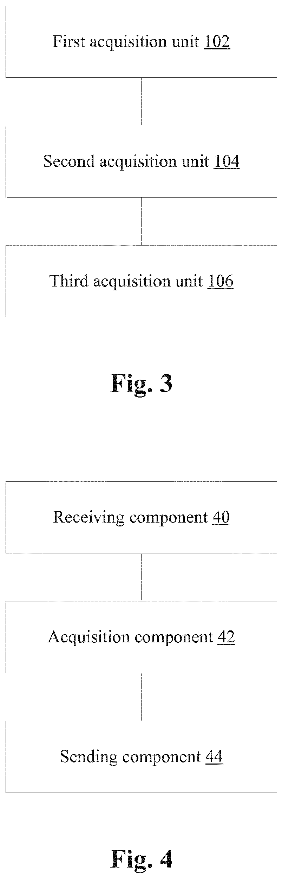

Fig. 3 is a block diagram showing the structure of a preferred collection component according to an embodiment of the present invention, as shown in Fig. 3, the collection component 10 may include at least one of the following components: a first acquisition element 102 which is configured to acquire a content view identifier selected by the user and take it as the content view selection information, wherein the content view identifier is used for indicating the content view selected by the user; a second acquisition element 104 which is configured to acquire FOV information selected by the user and take it as the content view selection information, wherein the FOV information is used for indicating the viewing angle of the content view selected by the user; and a third acquisition element 106 which is configured to acquire distance information selected by the user and take it as the content view selection information, wherein the distance information is used for indicating the viewing distance of the content view selected by the user.

In the embodiment, the collection component 10 may detect a control signal input by the user through an input device, and acquire the content view selection information according to the control signal; and/or, the collection component 10 may detect the gesture change of the user and acquire the content view selection information according to the gesture change.

In the embodiment, the collection component 10 may receive the convent view identifier input by the user, such as the view identifier input by a remote control, a keyboard, a touch-sensitive display and other input devices, and the viewing angle and/or the viewing distance of the content view, and request the immersive Communication server for the content view selected by the user. The collection component 10 may further detect the gesture change of the user, and acquire the change of the viewing angle and/or the viewing distance of the content view.

The immersive Communication client may further receive the content view selected by the user and fed back from the immersive Communication server, and display the content view selected by the user to the user through a display device. Of course, the immersive Communication server may acquire the content view according to the content view acquisition request of the immersive Communication client. The preferred immersive Communication server in the embodiment of the present invention is described below.

Fig. 4 is a block diagram showing the structure of an immersive Communication server according to an embodiment of the present invention, as shown in Fig. 4, the server mainly includes: a receiving component 40, an acquisition component 42 and a sending component 44, wherein the receiving component 40 is configured to receive a content view acquisition request from an immersive Communication client, wherein the content view acquisition request carries content view selection information of a user; the acquisition component 42 is connected with the receiving component 40 and is configured to acquire the content view according to the content view selection information; and the sending component 44 is connected with the acquisition component 42 and is configured to return the acquired content view to the immersive Communication client.

In an implementation way of the embodiment, the acquisition component 42 is configured to acquire the content view according to a content view identifier in the content view selection information, wherein the content view identifier is used for indicating the content view selected by the user. Or, the acquisition component 42 is configured to acquire the content view according to the FOV information and/or the distance information in the content view selection information.

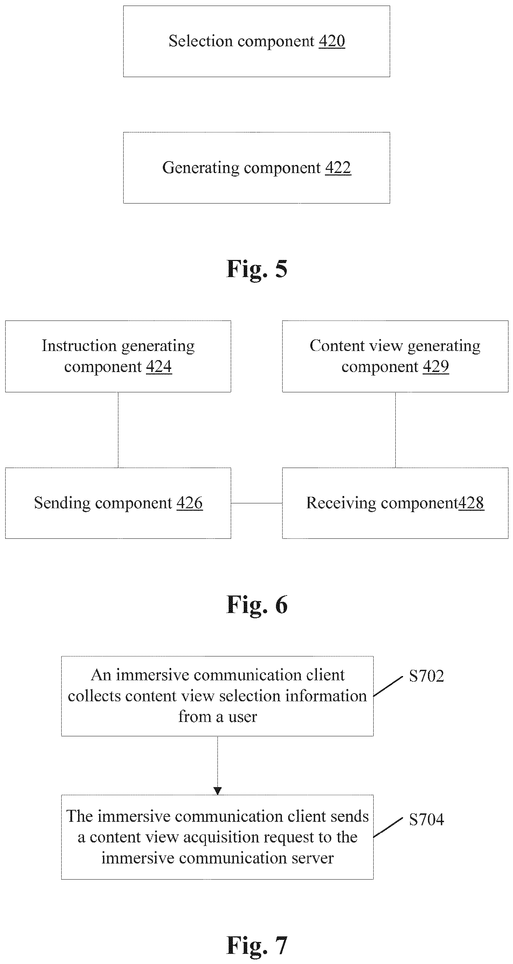

Fig. 5 is a first block diagram showing the structure of a preferred acquisition component according to an embodiment of the present invention, as shown in Fig. 5, the acquisition component 42 may include: a selection element 420 which is configured to select a multimedia content source according to the FOV information and/or the distance information in the content view selection information, wherein the FOV information is used for indicating the viewing angle of the content view selected by the user, and the distance information is used for indicating the viewing distance for the content view selected by the user; and a generation element 422 which is configured to generate the content view via the multimedia content source.

Preferably, in an implementation way of the embodiment, the selection element 420 is configured to determine one or more multimedia content capturing devices according to the FOV information and/or the distance information, and select the multimedia content source via the determined one or more multimedia content capturing devices. Or, the selection element 420 is configured to adjust the position of one or more multimedia content capturing devices according to the FOV information and/or the distance information, and select the multimedia content source via the adjusted one or more multimedia content capturing devices.

For example, the multimedia content capturing devices may be arranged in different positions, and the content view viewed by the user is generated via the multimedia content sources acquired by multimedia content capturing devices in different positions. If only one multimedia content capturing apparatus is arranged, the content view requested by the user may be acquired by adjusting the position of the multimedia content capturing apparatus.

Fig. 6 is a second block diagram showing the structure of a preferred acquisition component according to an embodiment of the present invention, as shown in Fig. 6, the acquisition component 42 may include: an instruction generation element 424 which is configured to generate a control instruction for acquiring the content view according to the content view selection information, a sending element 426 which is configured to send the control instruction for acquiring the content view to the multimedia content capturing apparatus; a receiving element 428 which is configured to receive the multimedia content source returned by the multimedia content capturing apparatus, wherein the multimedia content source is one selected by the multimedia content capturing apparatus according to the control instruction for acquiring the content view; and a content view generation element 429 which is configured to generate the content view via the multimedia content source.

In an implementation way of the embodiment, the immersive Communication server may further include: a notifying component which is configured to send a content view updating notification to other immersive Communication clients, wherein the content view updating notification carries the convent view change information of the immersive Communication clients. Other immersive Communication clients may acquire an updated content view according to the content view updating notification. In the actual application, an immersive Communication client for sending the content view updating notification may be set according to an operation strategy, such as the immersive Communication client viewing the same media content source.

A method for acquiring a content view provided by an embodiment of the present invention is described below.

Fig. 7 is a first diagram showing the flow of a method for acquiring a content view according to an embodiment of the present invention, as shown in Fig. 7, the method mainly includes Steps 702 to 704:
Step 702: An immersive Communication client collects content view selection information from a user.

In an implementation way of the embodiment, the content view selection information includes but is not limited to at least one piece of the following information: content view identifier which is used for indicating the content view selected by the user; FOV information which is used for indicating the viewing angle of the content view selected by the user; and distance information which is used for indicating the viewing distance of the content view selected by the user. For example, the corresponding relationship between the content view and the content view identifier may be set, and a corresponding content view is indicated through the content view identifier.

Preferably, the step that an immersive Communication client collects content view selection information includes but is not limited to at least one of the following steps: the immersive Communication client acquires the content view identifier selected by the user and takes it as the content view selection information; the immersive Communication client acquires the FOV of the content view selected by the user and takes it as the content view selection information; and the immersive Communication client acquires the viewing distance of the content view selected by the user and takes it as the content view selection information.

In the embodiment, the immersive Communication client may detect a control signal input by the user through an input device, and acquire the content view selection information according to the control signal; and/or, the immersive Communication client may detect the gesture change of the user and acquire the content view selection information according to the gesture change.

In the embodiment, the immersive Communication client may receive the convent view identifier input by the user, such as the view identifier input by a remote control, a keyboard, a touch-sensitive display and other input devices, and the viewing angle and/or the viewing distance of the content view, and request the immersive Communication server for the content view selected by the user. The immersive Communication client may further detect the gesture change of the user, and acquire the change of the viewing angle and/or the viewing distance of the content view.

Step 704: The immersive Communication client sends a content view acquisition request to the immersive Communication server, wherein the content view acquisition request is used for requesting the immersive Communication server to acquire the content view according to the content view selection information.

In an implementation way of the embodiment, the content view acquisition request includes: a content view updating request carrying the content view selection information, which is used for requesting the immersive Communication server to update the content view according to the content view selection information. In the actual application, when the user initiates immersive Communication, a request may be sent to acquire the content view; in the immersive Communication process, a content view updating request may be sent to update the content view being viewed, such as a content view switching request or a content view zooming request.

In a preferred implementation way of the embodiment, the immersive Communication client may further receive the content view fed back from the immersive Communication server, and display the received content view.

In a preferred implementation way of the embodiment, the immersive Communication client may further receive a content view updating notification from the immersive Communication server, wherein the content view updating notification caries the content view change information of other immersive Communication clients. The immersive Communication client may select whether to acquire the updated content view according to the content view updating notification.

In the actual application, the content view may include: a separate content view (such as a traditional video picture), and/or, a continuous content view (such as a panoramic view, which is formed by splicing a plurality of separate content views).

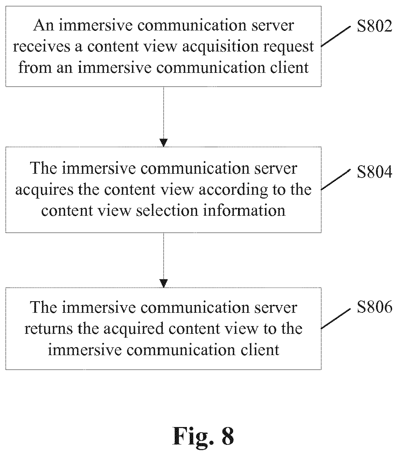

Fig. 8 is a second diagram showing the flow of a method for acquiring a content view according to an embodiment of the present invention, as shown in Fig. 8, the method mainly includes Steps 802 to 806:
Step 802: An immersive Communication server receives a content view acquisition request from an immersive Communication client, wherein the content view acquisition request carries content view selection information of a user.

In an implementation way of the embodiment, the content view selection information includes at least one piece of the following information: content view identifier which is used for indicating the content view selected by the user; FOV information which is used for indicating the viewing angle of the content view selected by the user; and distance information which is used for indicating the viewing distance of the content view selected by the user.

In an implementation way of the embodiment, the content view acquisition request includes: a content view updating request carrying the content view selection information, which is used for requesting the immersive Communication server to update the content view according to the content view selection information. In the actual application, when the user initiates immersive Communication, a request may be sent to acquire the content view; in the immersive Communication process, a content view updating request may be sent to update the content view being viewed, such as a content view switching request or a content view zooming request.

Step 804: The immersive Communication server acquires the content view according to the content view selection information.

In an implementation way of the embodiment, the step that the immersive Communication server acquires the content view according to the content view selection information may include: the immersive Communication server acquires the content view according to a content view identifier in the content view selection information; or, the immersive Communication server acquires the content view according to FOV information and/or distance information in the content view selection information. For example, the corresponding relationship between the content view and the content view identifier may be set in advance, and the immersive Communication server acquires the content view corresponding to the content view identifier selected by the user.

In another implementation way of the embodiment, the step that the immersive Communication server acquires the content view according to the content view selection information may include: the immersive Communication server selects a multimedia content source according to the FOV information and/or the distance information in the content view selection information; and generates the content view via the multimedia content source.

Preferably, the step of selecting the multimedia content source may include: one or more multimedia content capturing devices are determined according to the FOV information and/or the distance information, and the multimedia content source is selected via the determined one or more multimedia content capturing devices; or, the position of one or more multimedia content capturing devices is adjusted according to the FOV information and/or the distance information, and the multimedia content source is selected via the adjusted one or more multimedia content capturing devices.

Preferably, the step that the immersive Communication server acquires the content view according to the content view selection information may include: a control instruction for acquiring the content view is generated according to the content view selection information; the control instruction for acquiring the content view is sent to the multimedia content capturing apparatus; the multimedia content source returned by the multimedia content capturing apparatus is received, wherein the multimedia content source is one selected by the multimedia content capturing apparatus according to the control instruction for acquiring the content view; and the content view is generated according to the multimedia content source.

Step 806: The immersive Communication server returns the acquired content view to the immersive Communication client.

In an implementation way of the embodiment, the method may further include: the immersive Communication server sends a content view updating notification to other immersive Communication clients, wherein the content view updating notification carries the convent view change information of the immersive Communication clients.

By applying the embodiment, an immersive Communication system (such as one providing "being-there" and "being-with" immersion experience), may acquire a status and synchronously update a content source according to the current FOV of the user, so as to provide the content view to the user according to the selection of the user.

For example, the immersive Communication client requests to view a video source. The immersive Communication server captures a corresponding camera video according to the default view of the video source, and transmits and splices the video images and displays them to the immersive Communication client. The user adjusts the FOV of the video source according to own interests (input of a remote control and gesture detection), and the immersive Communication client collects related status parameters and sends a content view updating request to the immersive Communication server. The immersive Communication server refreshes the corresponding video source play parameter (such as camera identifier, video frame and panoramic view mapping) according to the received request and the configuration of a content provider (such as position and angle of the camera), and determines the video source content corresponding to the content view request. The immersive Communication client receives the video source content of the updated view, and displays it to the user.

The technical solution of the embodiment is described below in detail.

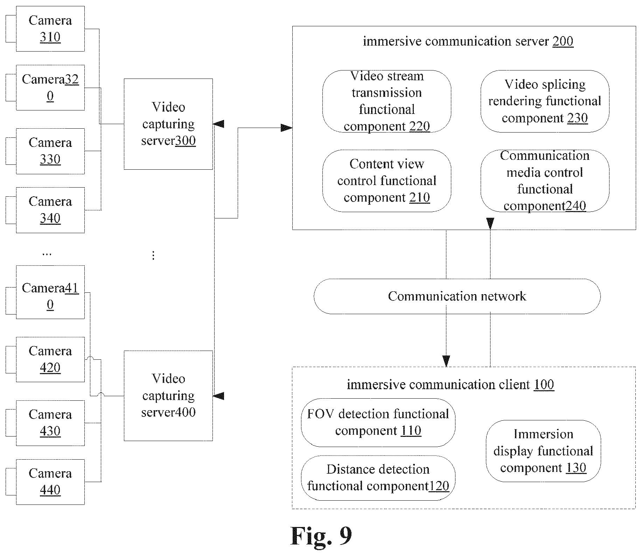

Fig. 9 is a diagram of an immersive Communication system according to an embodiment of the present invention, as shown in Fig. 9, the immersive Communication system may include: an immersive Communication client 100, an immersive Communication server 200, one or more video capturing servers which include a video capturing server 300 and a video capturing server 400, and one or more cameras which include cameras 310-340 and cameras 410-400 in the embodiment.

The immersive Communication client 100 is configured to provide an immersive Communication service terminal side capability, detect the change of FOV when the user views the content view and send a content view switching request to the immersive Communication server 200; and the immersive Communication client 100 is further configured to detect the distance change when the user views the content view, send a content view zooming request to the immersive Communication server 200, and receive the content view returned by the immersive Communication server 200 and display it in an immersion way.

Preferably, the immersive Communication client 100 includes the following functional components: an FOV detection functional component 110, a distance detection functional component 120 and an immersion display functional component 130.

The FOV detection functional component 110 is configured to detect the change of FOV when the user views the content view, wherein the FOV refers to a viewing angle in which the user may view the content view being displayed on a display device when the position between the two eyes of the user and the display device (such as a television screen and a projector screen) is relatively fixed, namely, an FOV, including an FOV in the horizontal direction and an FOV in the vertical direction.

The process that the FOV detection functional component 110 detects the change of the FOV of the user includes:
(1) The input of a user implemented via a remote control, a keyboard and the like are acquired.
   The user selects the FOA of the content view to be viewed thereby via the remote control, the keyboard and other input devices, such as a default FOA, a previous FOA, a next FOA and the like, and the FOA detection functional component acquires the input information and takes it as the change of FOA of the user. Or, the user changes the FOA of the content view to be viewed thereby via the remote control, the keyboard and other input devices, including zooming in or zooming out the current FOA in two directions (left and right or up and down), or zooming in or zooming out the current FOA in one direction (left, right, up or down), and the FOA detection functional component acquires the input information and takes it as the change of FOA of the user.
(2) The gesture change of the user (head) is acquired.

A specific component (such as an infrared camera and a depth sensor) is configured, and the FOA detection functional component may trace the gesture of the user (head), so as to detect the change of FOA of the user. Preferably, the function of detecting the change of FOA of the user by tracing the gesture of the user (head) is enabled only when the system enters a specific service mode (such as a somatic sense mode).

The change information of FOA of the user acquired by the FOA detection functional component 110 at least includes: information for measuring the viewing angle of FOA of the current user, such as a horizontal angle and a vertical angle, information preset for identifying the FOA of the current user, such as FOA of number 1, and FOA of number 2.

The distance detection functional component 120 is configured to detect the change of the distance when the user views the content view, wherein the distance refers to the distance between the user and the scene in the content view being viewed by the user on the display device when the FOA of the content view being viewed by the user on the display device is relatively fixed. Preferably, the distance detection functional component 120 may set an upper limit and a lower limit for the distance.

The distance detection functional component 120 detects the change of distance of the user includes:
(1) The input of a user implemented via a remote control, a keyboard and the like are acquired.
   The user selects the distance of the content view to be viewed thereby via the remote control, the keyboard and other input devices, such as a default distance, a previous distance, a next distance and the like, and the distance detection functional component 120 acquires the input information and takes it as the change of distance of the user. Or, the user changes the distance of the content view to be viewed thereby via the remote control, the keyboard and other input devices, such as decreasing the viewing distance forwards and increasing the viewing distance backwards, and the distance detection functional component 120 acquires the input information and takes it as the change of distance of the user.
(2) The gesture change of the user (body) is acquired.

A specific component (such as an infrared camera and a depth sensor) is configured, and the distance detection functional component 120 may trace the gesture of the user (body), so as to detect the change of distance of the user. Preferably, the function of detecting the change of distance of the user by tracing the gesture of the user (body) is enabled only when the system enters a specific service mode (such as a somatic sense mode).

The change information of distance of the user acquired by the distance detection functional component 120 at least includes: information for measuring the viewing position of the current user, such as the position of the user in the scene of the content view; and information preset for identifying the distance of the current user, such as distance of number 1, and distance of number 2.

The immersion display functional component 130 is configured to display the content view received by the immersive Communication client 100 to provide the user with an immersion view experience.

The immersive Communication server 200 is configured to provide an immersive Communication service network side capability, receive a content view switching request from the immersive Communication client 100, capture a view source according to the change parameter of FOA in the request and generate a switched content view; and the immersive Communication server 200 is further responsible for receiving a content view zooming request from the immersive Communication client 100, capturing a video source according to a view zooming parameter in the request and generating a zoomed content view. Moreover, the immersive Communication server 200 sends a content view updating notification to the immersive Communication client 100 according to a subscription request.

The preferred immersive Communication server 200 may include the following functional components: a content view control functional component 210, a view stream transmission functional component 220, a video stitching rendering functional component 230 and a communication media control functional component 240.

The content view control functional component 210 is configured to receive a content view switching request from the immersive Communication client 100, generate a video source capturing control instruction according to an FOV change parameter in the request, send a content view video source capturing control request to a video capturing server 300 or a video capturing server 400, and process the returned video source video images to generate a switched content view.

The video stream transmission functional component 220 is configured to receive multiple video image media streams from the video capturing server 300 or the video capturing server 400, converge them into one video media stream, and forward it to the video stitching rendering functional component 230.

The video stitching rendering functional component 230 is configured to process a series of captured video streams with a relatively small FOV, and splice them to generate a panoramic video stream with a relatively large FOV, i.e., the content view.

The communication media control functional component 240 is configured to manage a content view updating notification subscription request, and send a content view updating notification to the immersive Communication client 100 after the content view control functional component 210 completes updating the content view.

The video capturing server 300 and the video capturing server 400 are configured to calculate a plurality of video source (camera) parameters according to the content view video source capturing control request, and start video capturing, video frame encoding, time synchronization and the like.

Cameras 310-340 and cameras 410-440 are configured to acquire a vide image in a fixed viewing position.

In the embodiment of the present invention, the content view includes: a separate content view (such as a traditional video picture), and/or, a continuous content view (such as a panoramic view, which is formed by splicing a plurality of separate content views).

The method of the embodiment is described below in detail.

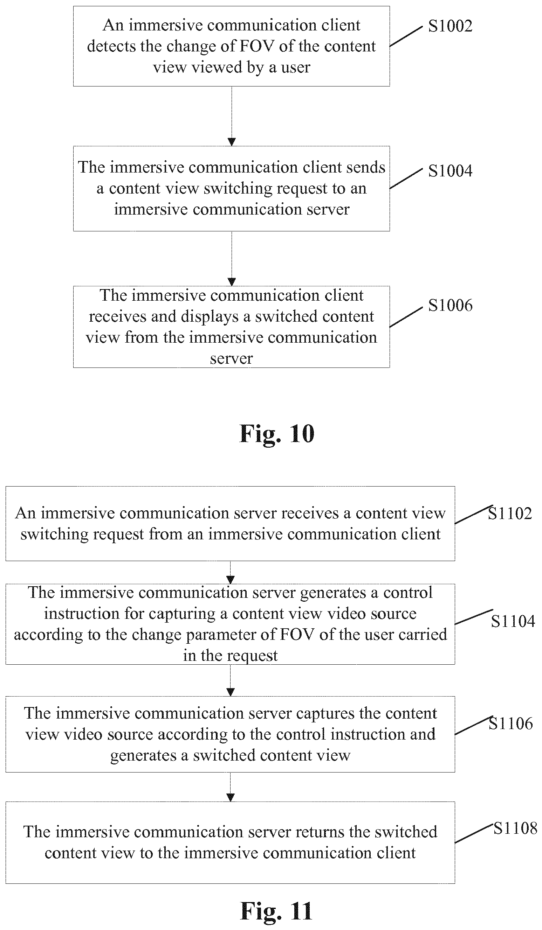

Fig. 10 is a first diagram showing the flow of a method for switching a content view according to an embodiment of the present invention, as shown in Fig. 10, the method includes Steps 1002 to 1006:
Step 1002: An immersive Communication client detects that the FOV of an immersive Communication user who is viewing the content view on a display device changes.
   The immersive Communication client may detect the change information of FOV by acquiring the input of a user implemented by a remote control, a keyboard and the like, or, the immersive Communication client may detect the change information of FOV by acquiring the change of gesture of the user (head).
Step 1004: The immersive Communication client generates a content view switching request according to the detected change information of FOV of the user.
Step 1006: The immersive Communication client receives the content view returned by the immersive Communication server after the FOV changes, and carries out immersion display.

Fig. 11 is a second diagram showing the flow of a method for switching a content view according to an embodiment of the present invention, as shown in Fig. 11, the method includes Steps 1102 to 1108:
Step 1102: An immersive Communication server receives a content view switching request from an immersive Communication client.
Step 1104: The immersive Communication server generates a control instruction for capturing a switched content view video source according to the change information of FOV of an immersive Communication user (such as information for measuring the viewing angle of FOV of the current user or information preset for identifying the FOV of the current user) carried in the content view switching request.
Step 1106: The immersive Communication server sends a content view video source capturing control request to a video capturing server according to the control instruction, indicates the video capturing server to update the content view video source and acquires a corresponding video source after the change of FOV of the user. The immersive Communication server generates a switched content view according to an updated video source.
Step 1108: The immersive Communication server returns a content view to the immersive Communication client after the FOV changes.

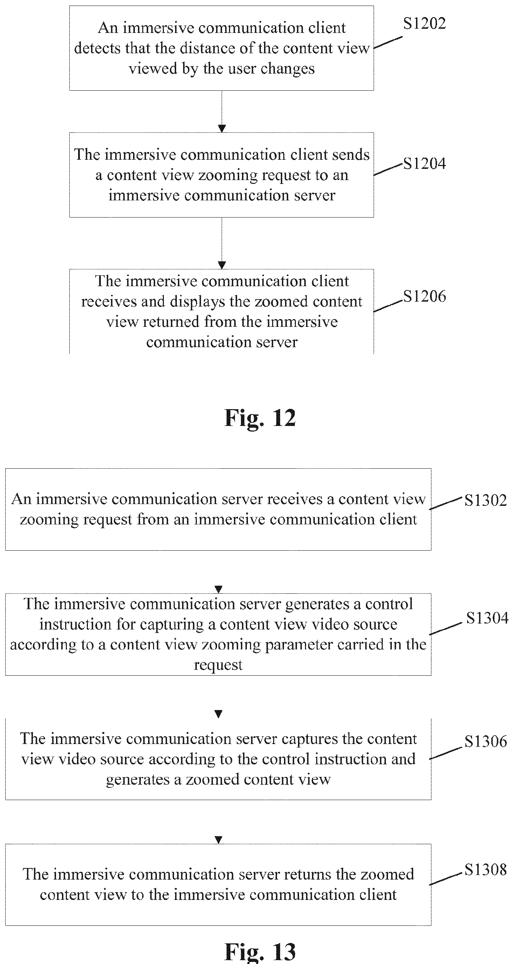

Fig. 12 is a first diagram showing the flow of a method for zooming a content view according to an embodiment of the present invention, as shown in Fig. 12, the method includes Steps 1202 to 1206:
Step 1202: An immersive Communication client detects that the distance of an immersive Communication user who is viewing the content view on a display device changes.
   The immersive Communication client may detect the change information of distance by acquiring the input of a user implemented by a remote control, a keyboard and the like, or, the immersive Communication client may detect the change information of distance by acquiring the change of gesture of the user (body).
Step 1204: The immersive Communication client generates a content view zooming request according to the detected change information of distance of the user and sends it to the immersive Communication server.
Step 1206: The immersive Communication client receives the content view returned by the immersive Communication server after the distance changes, and carries out immersion display.

Fig. 13 is a second diagram showing the flow of a method for zooming a content view according to an embodiment of the present invention, as shown in Fig. 13, the method includes Steps 1302 to 1308:
Step 1302: An immersive Communication server receives a content view zooming request from an immersive Communication client.
Step 1304: The immersive Communication server generates a control instruction for capturing a zoomed content view video source according to the change information of distance of an immersive Communication user (such as information for measuring the viewing position of the current user or information preset for identifying the distance of the current user) carried in the content view zooming request.
Step 1306: The immersive Communication server sends a content view video source capturing control request to a video capturing server according to the control instruction, indicates the video capturing server to update the content view video source and acquires a corresponding video source after the distance of the user changes. The immersive Communication server generates a zoomed content view according to an updated video source.
Step 1308: The immersive Communication server returns a content view to the immersive Communication client after the distance changes.

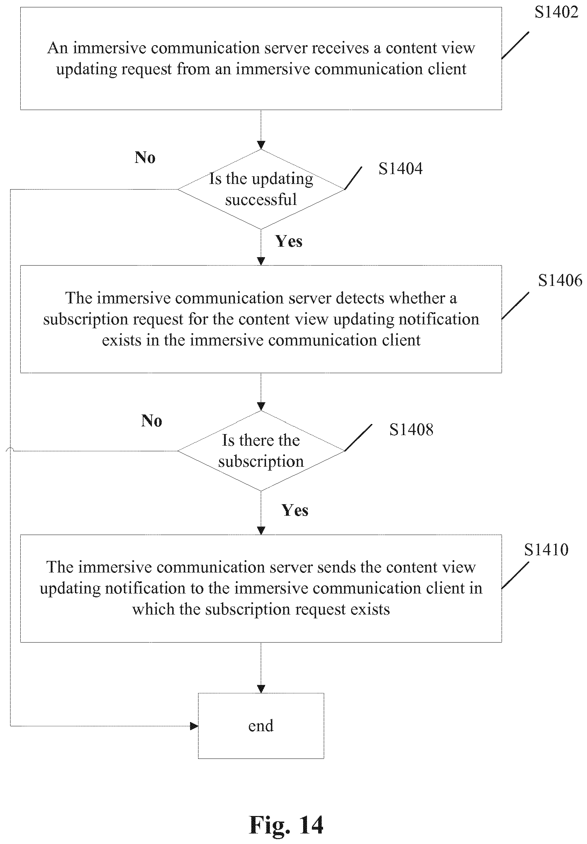

Fig. 14 is a diagram showing the flow of a method for notifying the updating of a content view according to an embodiment of the present invention, as shown in Fig. 14, the method includes Steps 1402 to 1410:
Step 1402: An immersive Communication server receives a content view updating request from an immersive Communication client, wherein the content view updating request may be a content view switching request or a content view zooming request here.
Step 1404: The immersive Communication server updates (switches or zooms) the content view according to the content view updating request, if the updating is successful, Step 1406 is executed, otherwise, the process is ended.
Step 1406: After the content view is updated successfully, the immersive Communication server detects whether a subscription request for the content view updating notification of the immersive Communication client exists. The subscription request may be one sent by other immersive Communication clients of the same user or one sent by the immersive Communication clients of other users, such as other users in the same immersive Communication group.
Step 1408: If the subscription request exists, the immersive Communication server sends a content view updating notification to the immersive Communication client of a subscription party, otherwise, the process is ended.
Step 1410: The immersive Communication client of the subscription party further requests for synchronizing the updating of the content view according to the notification. The method of the embodiment is described below through specific embodiments.

### First embodiment

According to the embodiment, the solution of the embodiment is described with a continuous content view as an example in detail. In the embodiment, a continuous content view switching request is taken as a specific implementation way of the content view updating request.

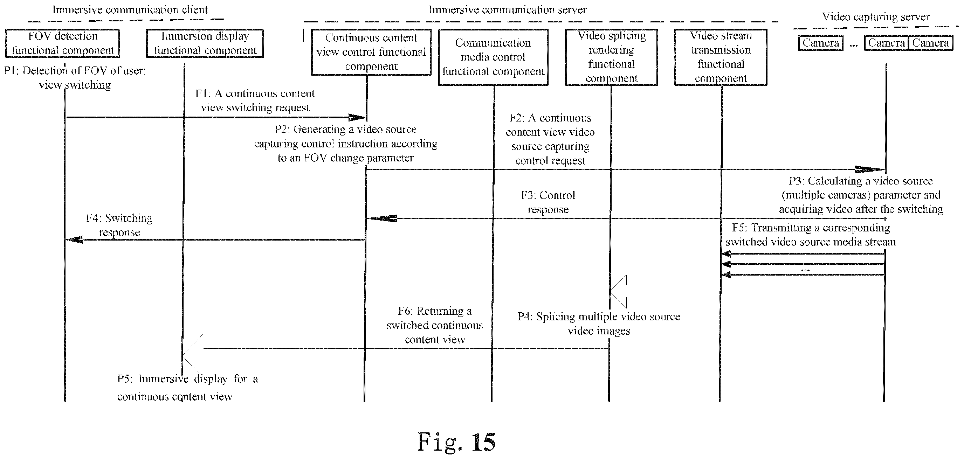

Fig. 15 is a diagram showing the signalling flow of a method for updating a content view according to a first embodiment of the present invention; and in combination with the signalling flow in Fig. 15, the method includes Steps 1 to 6:
Step 1: An immersive Communication client detects that the FOV of an immersive Communication user who is viewing the content view on a display device changes. The immersive Communication client generates a continuous content view switching request according to the detected change information of FOV of the user and sends it to an immersive Communication server.
Step 2: The immersive Communication server generates a control instruction for capturing a switched continuous content view video source according to the change information of FOV of an immersive Communication user (such as information for measuring the viewing angle of FOV of the current user or information preset for identifying the FOV of the current user) carried in the continuous content view switching request. The immersive Communication server sends a continuous content view video source capturing control request to a video capturing server.
Step 3: The video capturing server updates the continuous content view video source according to the continuous content view video source capturing control request, and acquires a video image after the change of FOV of the user, including calculating a video source (camera) parameter, and starting video capturing, video frame encoding, time synchronization and the like. The video capturing server returns a control response acknowledgement to the immersive Communication server.
Step 4: The immersive Communication server returns a continuous content view switching acknowledgement to the immersive Communication client.
Step 5: The video capturing server sends a video source media stream to the immersive Communication server after the FOV changes, and the immersive Communication server splices a plurality of video source video images to generate a switched continuous content view.
Step 6: The immersive Communication server returns a zoomed continuous content view to the immersive Communication client.

### Second embodiment

According to the embodiment, the solution of the embodiment is described with a continuous content view as an example in detail. In the embodiment, a continuous content view zooming request is taken as a specific implementation way of the content view updating request.

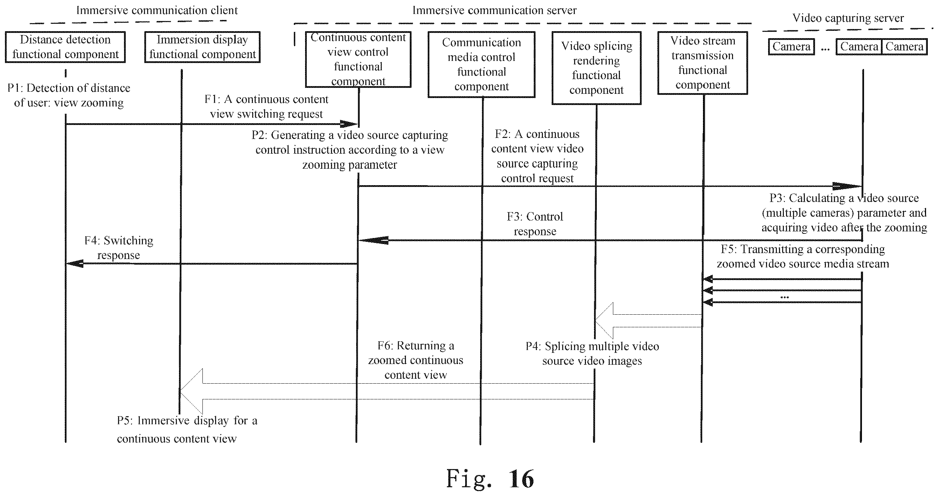

Fig. 16 is a diagram showing the signalling flow of a method for updating a content view according to a second embodiment of the present invention; and in combination with the signalling flow in Fig. 16, the method includes Steps 1 to 6:
Step 1: An immersive Communication client detects that the distance of an immersive Communication user who is viewing the content view on a display device changes. The immersive Communication client generates a continuous content view zooming request according to the detected change information of distance of the user and sends it to an immersive Communication server.
Step 2: The immersive Communication server generates a control instruction for capturing a zoomed continuous content view video source according to the change information of distance of an immersive Communication user (such as information for measuring the viewing position the current user or information preset for identifying the distance of the current user) carried in the request. The immersive Communication server sends a continuous content view video source capturing control request to a video capturing server.
Step 3: The video capturing server updates the continuous content view video source according to the continuous content view video source capturing control request, and acquires a video image after the distance of the user changes, including calculating a video source (camera) parameter, and starting video capturing, video frame encoding, time synchronization and the like. The video capturing server returns a control response acknowledgement to the immersive Communication server.
Step 4: The immersive Communication server returns a continuous content view zooming acknowledgement to the immersive Communication client.
Step 5: The video capturing server sends a video source media stream to the immersive Communication server after the distance changes, and the immersive Communication server splices a plurality of video source video images to generate a zoomed continuous content view.
Step 6: The immersive Communication server returns a zoomed continuous content view to the immersive Communication client.

### Third embodiment

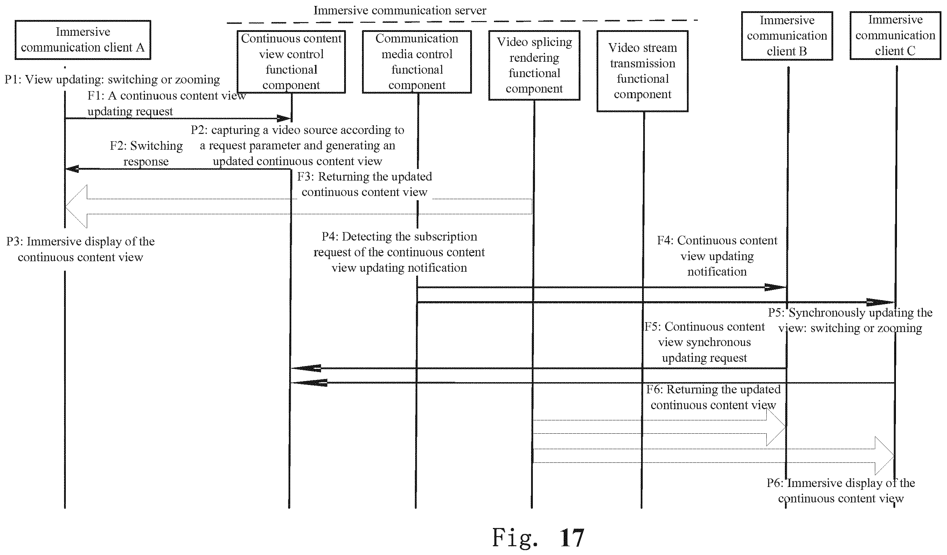

Fig. 17 is a diagram showing the signalling flow of a method for updating a content view according to a third embodiment of the present invention; and in combination with the signalling flow in Fig. 17, the method includes Steps 1 to 6:
Step 1: An immersive Communication client A detects that the FOV/distance of an immersive Communication user who is viewing the content view on a display device changes. The immersive Communication client A sends a continuous content view updating request (such as a continuous content view switching request or a zooming request) to an immersive Communication server.
Step 2: The immersive Communication server controls a video capturing server to acquire a video source according to the change information of FOV/distance of the immersive Communication user carried in the continuous content view updating request, and generates an updated continuous content view. The immersive Communication server returns a response to the immersive Communication client.
Step 3: The immersive Communication server returns the updated continuous content view and the immersive Communication client carries out immersion display for the continuous content view.
Step 4: The immersive Communication server detects whether a subscription request for the continuous content view updating notification of the immersive Communication client exists. The immersive Communication server sends a continuous content view updating notification to an immersive Communication client B and an immersive Communication client C of a subscription party.
Step 5: The immersive Communication clients B and C receive the notification and remind their users of the continuous content view updating status of the immersive Communication client A. According to the selection of the user, the immersive Communication clients B and C send a continuous content view synchronous updating request to the immersive Communication server respectively.
Step 6: The immersive Communication server returns the updated continuous content view to the immersive Communication clients B and C respectively, and the immersive Communication clients B and C carry out immersion display respectively.

Obviously, those skilled in the art shall understand that the components or steps of the present invention may be implemented by general computing apparatus and centralized in a single computing apparatus or distributed in a network consisting of multiple computing apparatus. Optionally, the components or steps may be implemented by program codes executable by the computing apparatus, so that they may be stored in a storage apparatus and executed by the computing apparatus, and, in some cases, the steps may be executed in a sequence different from the illustrated or described sequence, or they are respectively made into the integrated circuit components or many of them are made into a single integrated circuit component. By doing so, the present invention is not limited to any specific combination of hardware and software.

### Industrial Applicability

As mentioned above, the immersive Communication client, the immersive Communication server and the method for acquiring the content view provided by the embodiments of the present invention have the following beneficial effects: the immersive Communication client collects content view selection information from a user, and sends a content view acquisition request to the immersive Communication server, wherein the content view acquisition request is used for requesting the immersive Communication server to acquire the content view according to the content view selection information, so that the content view is provided according to the selection of the user.

## Claims

1. A method for acquiring a content view, comprising:
collecting, by an immersive Communication client, content view selection information from a user (S702); and
sending, by the immersive Communication client, a content view acquisition request to an immersive Communication server, wherein the content view acquisition request is used for requesting the immersive Communication server to acquire the content view according to the content view selection information (S704), the content view acquisition request comprises: a content view updating request carrying the content view selection information, wherein the content view updating request is used for requesting the immersive Communication server to update the content view according to the content view selection information;
receiving, by other immersive Communication clients, a content view updating notification from the immersive Communication server, wherein the content view updating notification carries content view change information of the said immersive Communication client.

2. The method according to claim 1, **characterized in that** the content view selection information comprises at least one piece of the following information:
content view identifier which is used for indicating the content view selected by the user;
Field of View, FOV, Information which is used for indicating a viewing angle, at which the content view is viewed, selected by the user; and
distance information which is used for indicating a viewing distance, at which the content view is viewed, selected by the user.

3. The method according to any one of claims 1 to 2, **characterized in that** collecting, by the immersive Communication client, content view selection information (S702) comprises:
detecting a control signal input by the user through an input device and acquiring the content view selection information according to the control signal; and/or,
detecting a gesture change of the user and acquiring the content view selection Information according to the gesture change.

4. The method according to any one of claims 1 to 2, **characterized in that** the content view comprises: a separate content view and/or a continuous content view.

5. A method for acquiring a content view, comprising:
receiving, by an immersive Communication server, a content view acquisition request from an immersive Communication client (S802), wherein the content view acquisition request carries content view selection information of a user, the content view acquisition request comprises: a content view updating request carrying the content view selection information, wherein the content view updating request is used for requesting the immersive Communication server to update the content view according to the content view selection information;
acquiring, by the immersive Communication server, a content view according to the content view selection information (S804); and
returning, by the immersive Communication server, the acquired content view to the immersive Communication client (S806);
sending, by the immersive Communication server, a content view updating notification to other immersive Communication clients, wherein the content view updating notification carries content view change Information of the immersive Communication client.

6. The method according to claim 5, **characterized in that** the content view selection information comprises at least one piece of the following Information:
content view identifier which is used for indicating the content view selected by the user;
Field of View, FOV, information which is used for indicating a viewing angle of the content view selected by the user; and
distance information which is used for indicating a viewing distance of the content view selected by the user.

7. The method according to any one of claims 5 to 6, **characterized in that** acquiring, by the Immersive Communication server, the content view according to the content view selection information (S804) comprises:
selecting, by the immersive Communication server, a multimedia content source according to the FOV information and/or the distance information in the content view selection information; and
generating, by the immersive Communication server, the content view via the multimedia content source.

8. The method according to claim 7, **characterized in that** selecting the multimedia content source comprises:
determining one or more multimedia content capturing devices according to the FOV information and/or the distance information, and selecting the multimedia content source via one or more multimedia content capturing devices; or,
adjusting positions of one or more multimedia content capturing devices according to the FOV information and/or the distance information, and selecting the multimedia content source via one or more multimedia content capturing devices.

9. The method according to any one of claims 5 to 6, **characterized in that** acquiring, by the immersive Communication server, the content view according to the content view selection information (S804) comprises:
generating a control instruction for acquiring the content view according to the content view selection information;
sending the control instruction for acquiring the content view to a multimedia content capturing device;
receiving a multimedia content source returned by the multimedia content capturing device, the multimedia content source being one selected by the multimedia content capturing device according to the control Instruction for acquiring the content view; and
generating the content view via the multimedia content source.

10. An immersive Communication client (100), comprising:
A collection component (10) configured to collect content view selection information from a user; and
a first sending component (12) configured to send a content view acquisition request to an immersive Communication server, wherein the content view acquisition request is used for requesting the immersive Communication server to acquire the content view according to the content view selection information, the content view acquisition request comprises: a content view updating request carrying the content view selection information, wherein the content view updating request is used for requesting the immersive Communication server to update the content view according to the content view selection information;
a first receiving component configured to receive a content view updating notification from the immersive Communication server, wherein the content view updating notification carries content view change information of other immersive Communication clients.

11. The client according to claim 10, **characterized in that** the collection component (10) comprises at least one of the following components:
a first acquisition element (102) configured to acquire a content view identifier selected by the user and take the content view identifier as the content view selection information, the content view identifier being used for indicating the content view selected by the user;
a second acquisition element (104) configured to acquire Field of View, FOV, information selected by the user and take the FOV information as the content view selection information, the FOV information being used for indicating a viewing angle selected by the user at which the content view is viewed; and
a third acquisition element (106) configured to acquire distance information selected by the user and take the distance information as the content view selection information, the distance information being used for indicating a viewing distance selected by the user at which the content view is selected.

12. An immersive Communication server (200), comprising:
a second receiving component (40) configured to receive a content view acquisition request from an immersive Communication client, wherein the content view acquisition request carries content view selection information of a user, the content view acquisition request comprises: a content view updating request carrying the content view selection information, wherein the content view updating request is used for requesting the immersive Communication server to update the content view according to the content view selection information;
an acquisition component (42) configured to acquire a content view according to the content view selection information; and
a second sending component (44) configured to return the acquired content view to the immersive Communication client;
a notifying component configured to send a content view updating notification to other immersive Communication clients, wherein the content view updating notification carries content view change information of the immersive Communication client.

13. The server according to claim 12, **characterized in that** the acquisition component (42) is configured to acquire the content view according to a content view identifier in the content view selection information, the content view identifier being used for indicating the content view selected by the user.

14. The server according to claim 12, **characterized in that** the acquisition component (42) comprises:
a selection element (420) configured to select a multimedia content source according to Field of View, FOV, information and/or distance information In the content view selection information, the FOV information being used for indicating a viewing angle selected by the user at which the content view is viewed, and the distance information being used for indicating a viewing distance selected by the user at which the content view is viewed; and
a generation element (422) configured to generate the content view via the multimedia content source.

15. The server according to claim 14, **characterized in that** the acquisition component (42) comprises:
an instruction generation element (424) configured to generate a control instruction for acquiring the content view according to the content view selection information;
a sending element (426) configured to send the control instruction for acquiring the content view to the multimedia content capturing device;
a receiving element (428) configured to receive the multimedia content source returned by the multimedia content capturing device, the multimedia content source being one selected by the multimedia content capturing device according to the control instruction for acquiring the content view; and
a content view generation element (429) configured to generate the content view via the multimedia content source.

## Patentansprüche

1. Verfahren zum Erfassen einer Inhaltsansicht, umfassend:
Sammeln, durch einen Client für immersive Kommunikation, von Inhaltsansicht-Auswahlinformationen von einem Benutzer (S702); und
Senden, durch den Client für immersive Kommunikation, einer Inhaltsansicht-Erfassungsanforderung an einen Server für immersive Kommunikation, wobei die Inhaltsansicht-Erfassungsanforderung verwendet wird zum Auffordern des Servers für immersive Kommunikation dazu, die Inhaltsansicht gemäß den Inhaltsansicht-Auswahlinformationen (S704) zu erfassen, wobei die Inhaltsansicht-Erfassungsanforderung umfasst: eine Inhaltsansicht-Aktualisierungsanforderung, die die Inhaltsansicht-Auswahlinformationen übermittelt, wobei die Inhaltsansicht-Aktualisierungsanforderung verwendet wird zum Auffordern des Servers für immersive Kommunikation dazu, die Inhaltsansicht gemäß den Inhaltsansicht-Auswahlinformationen zu aktualisieren;
Empfangen, durch andere Clients für immersive Kommunikation, einer Inhaltsansicht-Aktualisierungsbenachrichtigung von dem Server für immersive Kommunikation, wobei die Inhaltsansicht-Aktualisierungsbenachrichtigung Inhaltsansicht-Änderungsinformationen des Clients für immersive Kommunikation aktualisiert.

2. Verfahren nach Anspruch 1, **dadurch gekennzeichnet, dass** die Inhaltsansicht-Auswahlinformationen mindestens eine der folgenden Informationen umfassen:
Inhaltsansicht-Kennung, die verwendet wird zum Angeben der vom Benutzer ausgewählten Inhaltsansicht;
Sichtfeld-, FOV, Informationen, die verwendet werden zum Angeben eines vom Benutzer ausgewählten Sichtwinkels, aus dem die Inhaltssicht gesehen wird;
Abstandsinformationen, die verwendet werden zum Angeben eines vom Benutzer ausgewählten Sichtabstands, aus dem die Inhaltsansicht gesehen wird.

3. Verfahren nach einem der Ansprüche 1 bis 2, **dadurch gekennzeichnet, dass** das Sammeln von Inhaltsansicht-Auswahlinformationen (S702) durch den Client für immersive Kommunikation umfasst:
Erkennen einer Steuersignaleingabe durch den Benutzer über ein Eingabegerät und Erfassen der Inhaltsansicht-Auswahlinformationen gemäß dem Steuersignal; und/oder
Erkennen einer Gestenänderung des Benutzers und Erfassen der Inhaltsansicht-Auswahlinformationen gemäß der Gestenänderung.

4. Verfahren nach einem der Ansprüche 1 bis 2, **dadurch gekennzeichnet, dass** die Inhaltsansicht umfasst:
eine getrennte Inhaltsansicht und/oder eine kontinuierliche Inhaltsansicht.

5. Verfahren zum Erfassen einer Inhaltsansicht, umfassend:
Empfangen, durch einen Server für immersive Kommunikation, einer Inhaltsansicht-Erfassungsanforderung von einem Client für immersive Kommunikation (S802), wobei die Inhaltsansicht-Erfassungsanforderung Inhaltsansicht-Auswahlinformationen eines Benutzers übermittelt, wobei die Inhaltsansicht-Erfassungsanforderung umfasst: eine Inhaltsansicht-Aktualisierungsanforderung, die die Inhaltsansicht-Auswahlinformationen übermittelt, wobei die Inhaltsansicht-Aktualisierungsanforderung verwendet wird zum Auffordern des Servers für immersive Kommunikation dazu, die Inhaltsansicht gemäß den Inhaltsansicht-Auswahlinformationen zu aktualisieren;
Erfassen, durch den Server für immersive Kommunikation, einer Inhaltsansicht gemäß den Inhaltsansicht-Auswahlinformationen (S804); und
Zurückgeben, durch den Server für immersive Kommunikation, der erfassten Inhaltsansicht an den Client für immersive Kommunikation (S806);
Senden, durch den Server für immersive Kommunikation, einer Inhaltsansicht-Aktualisierungsbenachrichtigung an andere Clients für immersive Kommunikation, wobei die Inhaltsansicht-Aktualisierungsbenachrichtigung Inhaltsansicht-Änderungsinformationen des Clients für immersive Kommunikation übermittelt.

6. Verfahren nach Anspruch 5, **dadurch gekennzeichnet, dass** die Inhaltsansicht-Auswahlinformationen mindestens eine der folgenden Informationen umfassen:
Inhaltsansicht-Kennung, die verwendet wird zum Angeben der vom Benutzer ausgewählten Inhaltsansicht;
Sichtfeld-, FOV, Informationen, die verwendet werden zum Angeben eines Sichtwinkels der vom Benutzer ausgewählten Inhaltsansicht; und
Abstandsinformationen, die verwendet werden zum Angeben eines Sichtabstands der vom Benutzer ausgewählten Inhaltsansicht.

7. Verfahren nach einem der Ansprüche 5 bis 6, **dadurch gekennzeichnet, dass** das Erfassen der Inhaltsansicht gemäß den Inhaltsansicht-Auswahlinformationen (S804) durch den Server für immersive Kommunikation umfasst:
Auswählen, durch den Server für immersive Kommunikation, einer Multimediainhaltsquelle gemäß den FOV-Informationen und/oder den Abstandsinformationen in den Inhaltsansicht-Auswahlinformationen; und
Erzeugen der Inhaltsansicht durch den Server für immersive Kommunikation via die Multimediainhaltsquelle.

8. Verfahren nach Anspruch 7, **dadurch gekennzeichnet, dass** das Auswählen der Multimediainhaltsquelle umfasst:
Bestimmen von einer oder mehreren Multimediainhalt-Aufzeichnungsvorrichtungen gemäß den FOV-Informationen und/oder den Abstandsinformationen, und Auswählen der Multimediainhaltsquelle via eine oder mehrere Multimediainhalt-Aufzeichnungsvorrichtungen; oder
Anpassen von Positionen von einer oder mehreren Multimediainhalt-Aufzeichnungsvorrichtungen gemäß den FOV-Informationen und/oder den Abstandsinformationen, und Auswählen der Multimediainhaltsquelle via eine oder mehrere Multimediainhalt-Aufzeichnungsvorrichtungen.

9. Verfahren nach einem der Ansprüche 5 bis 6, **dadurch gekennzeichnet, dass** das Erfassen der Inhaltsansicht gemäß den Inhaltsansicht-Auswahlinformationen (S804) durch den Server für immersive Kommunikation umfasst:
Erzeugen einer Steueranweisung zum Erfassen der Inhaltsansicht gemäß den Inhaltsansicht-Auswahlinformationen;
Senden der Steueranweisung zum Erfassen der Inhaltsansicht an eine Multimediainhalt-Aufzeichnungsvorrichtung;
Empfangen einer von der Multimediainhalt-Aufzeichnungsvorrichtung zurückgegebenen Multimediainhaltsquelle, wobei die Multimediainhaltsquelle eine ist, die von der Multimediainhalt-Aufzeichnungsvorrichtung gemäß der Steueranweisung zum Erfassen der Inhaltsansicht ausgewählt wird; und
Erzeugen der Inhaltsansicht via die Multimediainhaltsquelle.

10. Client für immersive Kommunikation (100), umfassend:
eine Sammelkomponente (10), die dazu eingerichtet ist, Inhaltsansicht-Auswahlinformationen von einem Benutzer zu sammeln; und
eine erste Sendekomponente (12), die dazu eingerichtet ist, eine Inhaltsansicht-Erfassungsanforderung an einen Server für immersive Kommunikation zu senden, wobei die Inhaltsansicht-Erfassungsanforderung verwendet wird zum Auffordern des Servers für immersive Kommunikation dazu, die Inhaltsansicht gemäß den Inhaltsansicht-Auswahlinformationen zu erfassen, wobei die Inhaltsansicht-Erfassungsanforderung umfasst: eine Inhaltsansicht-Aktualisierungsanforderung, die die Inhaltsansicht-Auswahlinformationen übermittelt, wobei die Inhaltsansicht-Aktualisierungsanforderung verwendet wird zum Auffordern des Servers für immersive Kommunikation dazu, die Inhaltsansicht gemäß den Inhaltsansicht-Auswahlinformationen zu aktualisieren;
eine erste Empfangskomponente, die dazu eingerichtet ist, eine Inhaltsansicht-Aktualisierungsbenachrichtigung von dem Server für immersive Kommunikation zu empfangen, wobei die Inhaltsansicht-Aktualisierungsbenachrichtigung Inhaltsansicht-Änderungsinformationen von anderen Clients für immersive Kommunikation übermittelt.

11. Client nach Anspruch 10, **dadurch gekennzeichnet, dass** die Sammelkomponente (10) mindestens eine der folgenden Komponenten umfasst:
ein erstes Erfassungselement (102), das dazu eingerichtet ist, eine vom Benutzer ausgewählte Inhaltsansicht-Kennung zu erfassen und die Inhaltsansicht-Kennung als die Inhaltsansicht-Auswahlinformationen herzunehmen, wobei die Inhaltsansicht-Kennung verwendet wird zum Angeben der vom Benutzer ausgewählten Inhaltsansicht;
ein zweites Erfassungselement (104), das dazu eingerichtet ist, von dem Benutzer ausgewählte Sichtfeld-, FOV, Informationen zu erfassen und die FOV-Informationen als die Inhaltsansicht-Auswahlinformationen herzunehmen, wobei die FOV-Informationen verwendet werden zum Angeben eines vom Benutzer ausgewählten Sichtwinkels, aus dem die Inhaltssicht gesehen wird; und
ein drittes Erfassungselement (106), das dazu eingerichtet ist, vom Benutzer ausgewählte Abstandsinformationen zu erfassen und die Abstandsinformationen als die Inhaltsansicht-Auswahlinformationen herzunehmen, wobei die Abstandsinformationen verwendet werden zum Angeben eines vom Benutzer ausgewählten Sichtabstands, aus der die Inhaltsansicht ausgewählt wird.

12. Server für immersive Kommunikation (200), umfassend:
eine zweite Empfangskomponente (40), die dazu eingerichtet ist, eine Inhaltsansicht-Erfassungsanforderung von einem Client für immersive Kommunikation zu empfangen, wobei die Inhaltsansicht-Erfassungsanforderung Inhaltsansicht-Auswahlinformationen eines Benutzers übermittelt, wobei die Inhaltsansicht-Erfassungsanforderung umfasst: eine Inhaltsansicht-Aktualisierungsanforderung, die die Inhaltsansicht-Auswahlinformationen übermittelt, wobei die Inhaltsansicht-Aktualisierungsanforderung verwendet wird zum Auffordern des Servers für immersive Kommunikation dazu, die Inhaltsansicht gemäß den Inhaltsansicht-Auswahlinformationen zu aktualisieren;
eine Erfassungskomponente (42), die dazu eingerichtet ist, eine Inhaltsansicht gemäß den Inhaltansicht-Auswahlinformationen zu erfassen; und
eine zweite Sendekomponente (44), die dazu eingerichtet ist, die erfasste Inhaltsansicht an den Client für immersive Kommunikation zurückzugeben;
eine Benachrichtigungskomponente, die dazu eingerichtet ist, eine Inhaltsansicht-Aktualisierungsbenachrichtigung an andere Clients für immersive Kommunikation zu senden, wobei die Inhaltsansicht-Aktualisierungsbenachrichtigung Inhaltsansicht-Änderungsinformationen des Clients für immersive Kommunikation übermittelt.

13. Server nach Anspruch 12, **dadurch gekennzeichnet, dass** die Erfassungskomponente (42) dazu eingerichtet ist, die Inhaltsansicht gemäß einer Inhaltsansicht-Kennung in den Inhaltsansicht-Auswahlinformationen zu erfassen, wobei die Inhaltsansicht-Kennung zum Angeben der vom Benutzer ausgewählten Inhaltsansicht verwendet wird.

14. Server nach Anspruch 12, **dadurch gekennzeichnet, dass** die Erfassungskomponente (42) umfasst:
ein Auswahlelement (420), das dazu eingerichtet ist, eine Multimediainhaltsquelle gemäß Sichtfeld-, FOV, Informationen und/oder Abstandsinformationen in den Inhaltsansicht-Auswahlinformationen auszuwählen, wobei die FOV-Informationen verwendet werden zum Angeben eines vom Benutzer ausgewählten Sichtwinkels, aus dem die Inhaltsansicht gesehen wird, und die Abstandsinformationen verwendet werden zum Angeben eines vom Benutzer ausgewählten Sichtabstands, aus dem die Inhaltsansicht gesehen wird; und
ein Erzeugungselement (422), das dazu eingerichtet ist, die Inhaltsansicht via die Multimediainhaltsquelle zu erzeugen.

15. Server nach Anspruch 14, **dadurch gekennzeichnet, dass** die Erfassungskomponente (42) umfasst:
ein Anweisungserzeugungselement (424), das dazu eingerichtet ist, eine Steueranweisung zum Erfassen der Inhaltsansicht gemäß den Inhaltsansicht-Auswahlinformationen zu erzeugen;
ein Sendeelement (426), das dazu eingerichtet ist, die Steueranweisung zum Erfassen der Inhaltsansicht an die Multimediainhalt-Aufzeichnungsvorrichtung zu senden;
ein Empfangselement (428), das dazu eingerichtet ist, die von der Multimediainhalt-Aufzeichnungsvorrichtung zurückgegebene Multimediainhaltsquelle zu empfangen, wobei die Multimediainhaltsquelle eine ist, die von der Multimediainhalt-Aufzeichnungsvorrichtung gemäß der Steueranweisung zum Erfassen der Inhaltsansicht ausgewählt wird; und
ein Inhaltsansicht-Erzeugungselement (429), das dazu eingerichtet ist, die Inhaltsansicht via die Multimediainhaltsquelle zu erzeugen.

## Revendications

1. Procédé pour acquérir une vue de contenu, comprenant :
la collecte, par un client de communication en immersion, d'informations de sélection de vue de contenu à partir d'un utilisateur (S702) ; et
l'envoi, par le client de communication en immersion, d'une demande d'acquisition de vue de contenu à un serveur de communication en immersion, dans lequel la demande d'acquisition de vue de contenu est utilisée pour demander au serveur de communication en immersion d'acquérir la vue de contenu en fonction des informations de sélection de vue de contenu (S704), la demande d'acquisition de vue de contenu comprend : une demande de mise à jour de vue de contenu portant les informations de sélection de vue de contenu, dans lequel la demande de mise à jour de vue de contenu est utilisée pour demander au serveur de communication en immersion de mettre à jour la vue de contenu en fonction des informations de sélection de vue de contenu ;
la réception, par d'autres clients de communication en immersion, d'une notification de mise à jour de vue de contenu à partir du serveur de communication en immersion, dans lequel la notification de mise à jour de vue de contenu porte des informations de changement de vue de contenu dudit client de communication en immersion.

2. Procédé selon la revendication 1, **caractérisé en ce que** les informations de sélection de vue de contenu comprennent au moins un élément des informations suivantes :
un identificateur de vue de contenu qui est utilisé pour indiquer la vue de contenu sélectionnée par l'utilisateur ;
des informations de champ de vision, FOV, qui sont utilisées pour indiquer un angle de vision, avec lequel la vue de contenu est visionnée, sélectionné par l'utilisateur ; et
des informations de distance qui sont utilisées pour indiquer une distance de vision, à laquelle la vue de contenu est visionnée, sélectionnée par l'utilisateur.

3. Procédé selon l'une quelconque des revendications 1 à 2, **caractérisé en ce que** la collecte, par le client de communication en immersion, d'informations de sélection de vue de contenu (S702) comprend :
la détection d'une entrée de signal de commande par l'utilisateur par le biais d'un dispositif d'entrée et l'acquisition des informations de sélection de vue de contenu en fonction du signal de commande ; et/ou
la détection d'un changement de gestuelle de l'utilisateur et l'acquisition des informations de sélection de vue de contenu en fonction du changement de gestuelle.

4. Procédé selon l'une quelconque des revendications 1 à 2, **caractérisé en ce que** la vue de contenu comprend : une vue de contenu séparée et/ou une vue de contenu continue.

5. Procédé pour acquérir une vue de contenu, comprenant :
la réception, par un serveur de communication en immersion, d'une demande d'acquisition de vue de contenu à partir d'un client de communication en immersion (S802), dans lequel la demande d'acquisition de vue de contenu porte des informations de sélection de vue de contenu d'un utilisateur, la demande d'acquisition de vue de contenu comprend : une demande de mise à jour de vue de contenu portant les informations de sélection de vue de contenu, dans lequel la demande de mise à jour de vue de contenu est utilisée pour demander au serveur de communication en immersion de mettre à jour la vue de contenu en fonction des informations de sélection de vue de contenu ;
l'acquisition, par le serveur de communication en immersion, d'une vue de contenu en fonction des informations de sélection de vue de contenu (S804) ; et
le renvoi, par le serveur de communication en immersion, de la vue de contenu acquise au client de communication en immersion (S806) ;
l'envoi, par le serveur de communication en immersion, d'une notification de mise à jour de vue de contenu à d'autres clients de communication en immersion, dans lequel la notification de mise à jour de vue de contenu porte des informations de changement de vue de contenu du client de communication en immersion.

6. Procédé selon la revendication 5, **caractérisé en ce que** les informations de sélection de vue de contenu comprennent au moins un élément des informations suivantes :
un identificateur de vue qui est utilisé pour indiquer la vue de contenu sélectionnée par l'utilisateur ;
des informations de champ de vision, FOV, qui sont utilisées pour indiquer un angle de vision de la vue de contenu sélectionné par l'utilisateur ; et
des informations de distance qui sont utilisées pour indiquer une distance de vision de la vue de contenu sélectionnée par l'utilisateur.

7. Procédé selon l'une quelconque des revendications 5 à 6, **caractérisé en ce que** l'acquisition, par le serveur de communication en immersion, de la vue de contenu en fonction des informations de sélection de vue de contenu (S804) comprend :
la sélection, par le serveur de communication en immersion, d'une source de contenus multimédias en fonction des informations FOV et/ou des informations de distance dans les informations de sélection de vue de contenu ; et
la génération, par le serveur de communication en immersion, de la vue de contenu par le biais de la source de contenus multimédias.

8. Procédé selon la revendication 7, **caractérisé en ce que** la sélection de la source de contenus multimédias comprend :
la détermination d'un ou plusieurs dispositifs de capture de contenus multimédias en fonction des informations FOV et/ou des informations de distance et la sélection de la source de contenus multimédias par le biais d'un ou plusieurs dispositifs de capture de contenus multimédias ; ou
le réglage de positions d'un ou plusieurs dispositifs de capture de contenus multimédias en fonction des informations FOV et/ou des informations de distance et la sélection de la source de contenus multimédias par le biais d'un ou plusieurs dispositifs de capture de contenus multimédias.

9. Procédé selon l'une quelconque des revendications 5 à 6, **caractérisé en ce que** l'acquisition, par le serveur de communication en immersion, de la vue de contenu en fonction des informations de sélection de vue de contenu (S804) comprend :
la génération d'une instruction de commande pour acquérir la vue de contenu en fonction des informations de sélection de vue de contenu ;
l'envoi de l'instruction de commande pour acquérir la vue de contenu à un dispositif de capture de contenus multimédias ;
la réception d'une source de contenus multimédias renvoyée par le dispositif de capture de contenus multimédias, la source de contenus multimédias étant une source sélectionnée par le dispositif de capture de contenus multimédias en fonction de l'instruction de commande pour acquérir la vue de contenu ; et
la génération de la vue de contenu par le biais de la source de contenus multimédias.

10. Client de communication par immersion (100) comprenant :
un composant de collecte (10) configuré pour collecter des informations de sélection de vue de contenu à partir d'un utilisateur ; et
un premier composant de transmission (12) configuré pour envoyer une demande d'acquisition de vue de contenu à un serveur de communication en immersion, dans lequel la demande d'acquisition de vue de contenu est utilisée pour demander au serveur de communication en immersion d'acquérir la vue de contenu en fonction des informations de sélection de vue de contenu, la demande d'acquisition de vue de contenu comprend : une demande de mise à jour de vue de contenu portant les informations de sélection de vue de contenu, dans lequel la demande de mise à jour de vue de contenu est utilisée pour demander au serveur de communication en immersion de mettre à jour la vue de contenu en fonction des informations de sélection de vue de contenu ;
un premier composant de réception configuré pour recevoir une notification de mise à jour de vue de contenu à partir du serveur de communication en immersion, dans lequel la notification de mise à jour de vue de contenu porte des informations de changement de vue de contenu d'autres clients de communication en immersion.

11. Client selon la revendication 10, **caractérisé en ce que** le composant de collecte (10) comprend au moins un des composants suivants :
un premier élément d'acquisition (102) configuré pour acquérir un identificateur de vue de contenu sélectionné par l'utilisateur et prendre l'identificateur de vue de contenu comme les informations de sélection de vue de contenu, l'identificateur de vue de contenu étant utilisé pour indiquer la vue de contenu sélectionnée par l'utilisateur ;
un deuxième élément d'acquisition (104) configuré pour acquérir des informations de champ de vision, FOV, sélectionnées par l'utilisateur et prendre les informations FOV comme les informations de sélection de vue de contenu, les informations FOV étant utilisées pour indiquer un angle de vision sélectionné par l'utilisateur, avec lequel la vue de contenu est visionnée ; et
un troisième élément d'acquisition (106) configuré pour acquérir des informations de distance sélectionnées par l'utilisateur et prendre les informations de distance comme les informations de sélection de vue de contenu, les informations de distance étant utilisées pour indiquer une distance de vision sélectionnée par l'utilisateur, à laquelle la vue de contenu est sélectionnée.

12. Serveur de communication par immersion (200) comprenant :
un deuxième composant de réception (40) configuré pour recevoir une demande d'acquisition de vue de contenu à partir d'un client de communication en immersion, dans lequel la demande d'acquisition de vue de contenu porte des informations de sélection de vue de contenu d'un utilisateur, la demande d'acquisition de vue de contenu comprend : une demande de mise à jour de vue de contenu portant les informations de sélection de vue de contenu, dans lequel la demande de mise à jour de vue de contenu est utilisée pour demander au serveur de communication en immersion de mettre à jour la vue de contenu en fonction des informations de sélection de vue de contenu ;
un composant d'acquisition (42) configuré pour acquérir une vue de contenu en fonction des informations de sélection de vue de contenu ; et
un deuxième composant de transmission (44) configuré pour renvoyer la vue de contenu acquise au client de communication en immersion ;
un composant de notification configuré pour envoyer une notification de mise à jour de vue de contenu à d'autres clients de communication en immersion, dans lequel la notification de mise à jour de vue de contenu porte des informations de changement de vue de contenu du client de communication en immersion.

13. Serveur selon la revendication 12, **caractérisé en ce que** le composant d'acquisition (42) est configuré pour acquérir la vue de contenu en fonction d'un identificateur de vue de contenu dans les informations de sélection de vue de contenu, l'identificateur de vue de contenu étant utilisé pour indiquer la vue de contenu sélectionnée par l'utilisateur.

14. Serveur selon la revendication 12, **caractérisé en ce que** le composant d'acquisition (42) comprend :
un élément de sélection (420) configuré pour sélectionner une source de contenus multimédias en fonction d'informations de champ de vision, FOV, et/ou d'informations de distance dans les informations de sélection de vue de contenu, les informations FOV étant utilisées pour indiquer un angle de vision sélectionné par l'utilisateur, avec lequel la vue de contenu est visionnée, et les informations de distance étant utilisées pour indiquer une distance de vision sélectionnée par l'utilisateur, à laquelle la vue de contenu est sélectionnée ; et
un élément de génération (422) configuré pour générer la vue de contenu par le biais de la source de contenus multimédias.

15. Serveur selon la revendication 14, **caractérisé en ce que** le composant d'acquisition (42) comprend :
un élément de génération d'instructions (424) configuré pour générer une instruction de commande pour acquérir la vue de contenu en fonction des informations de sélection de vue de contenu ;
un élément de transmission (426) configuré pour transmettre l'instruction de commande pour acquérir la vue de contenu au dispositif de capture de contenus multimédias ;
un élément de réception (428) configuré pour recevoir la source de contenus multimédias renvoyée par le dispositif de capture de contenus multimédias, la source de contenus multimédias étant une source sélectionnée par le dispositif de capture de contenus multimédias en fonction de l'instruction de commande pour acquérir la vue de contenu ; et
un élément de génération de vue de contenu (429) configuré pour générer la vue de contenu par le biais de la source de contenus multimédias.
